# EUROPEAN PATENT SPECIFICATION

(11) **EP 3 641 025 B1**
(45) Date of publication and mention of the grant of the patent: **24.12.2025**
(21) Application number: 19178937.9
(22) Date of filing: 07.06.2019
(51) Int. Cl.: H01M 4/133, H01M 4/587, H01M 10/0525, H01M 4/131, H01M 4/505, H01M 4/525, H01M 4/134, H01M 4/02

(54) **SECONDARY BATTERY**
SEKUNDÄRBATTERIE
BATTERIE SECONDAIRE

(30) Priority: 17.10.2018 CN 201811208733
(43) Date of publication of application: 22.04.2020
(73) Proprietor: Contemporary Amperex Technology (Hong Kong) Limited, Central, Central And Western District (HK)
(72) Inventor: WANG, Jiazheng, Ningde, Fujian 352100 (CN); SHEN, Yuliang, Ningde, Fujian 352100 (CN); KANG, Meng, Ningde, Fujian 352100 (CN); HE, Libing, Ningde, Fujian 352100 (CN)
(74) Representative: Lorenz Seidler Gossel Part. mbB

(56) References cited:
- WO-A1-2017/104145
- CN-A- 106 299 332
- US-A1- 2016 190 645

## Description

### FIELD OF THE PRESENT INVENTION

The present invention relates to the field of battery, and particularly relates to a secondary battery.

### BACKGROUND OF THE PRESENT INVENTION

Rechargeable batteries are widely used in the field such as mobile phones, computers, household electric appliances, electric power tools and the like due to significant characteristics of light weight, high energy density, no pollution, none memory effect, long service life and the like. The charging time has got more and more attention from end consumers and is also one of the key factors limiting the popularizion of the rechargeable batteries.

From the viewpoint of technical principle, a core affecting the charging speed of the battery lies in the negative electrode plate. In order to obtain a battery having high energy density, the weight of the active material coated on the unit area of the current collector generally increases when the negative electrode plate is designed, however, the charging capability of the battery often does not meet the requirements; when the charging capability of the battery is satisfied by reducing the weight of the active material coated on the unit area of the current collector, the energy density of the battery does not meet the requirements. Moreover, there is a serious heat problem during the fast charging process of the battery, which also affects the service safety of the end consumers.

Therefore, how to obtain a battery having high safety performance and fast charging capability without compromising the energy density is the key in the design and the engineering of the negative electrode plate.

WO 2017/104145 A1 discloses a secondary battery comprising a positive electrode plate, a negative electrode plate, an electrolyte and a separator, the negative electrode plate comprising a negative current collector and a negative film, the negative film being provided on at least one surface of the negative current collector and comprising a negative active material.

Another lithium ion battery is disclosed in CN 106 299 332 A and US 2016/190645 A1, forming relevant prior art.

### SUMMARY OF THE PRESENT INVENTION

In view of the problem existing in the background, an object of the present invention is to provide a secondary battery, which has long cycle life, high energy density and fast charging capability at the same time.

The present invention provides a secondary battery, which comprises a positive electrode plate, a negative electrode plate, an electrolyte and a separator, the negative electrode plate comprises a negative current collector and a negative film, the negative film is provided on at least one surface of the negative current collector and comprises a negative active material. The negative active material comprises graphite, the negative electrode plate satisfies a relationship: 0.05≤Vp/Sp≤0.30. Vp = a thickness of the negative film represented by T × a porosity of the negative film represented by P, a unit of the thickness of the negative film represented by T is µm; Sp = a mass of the negative active material in the negative film per unit area represented by M × a specific surface area of the negative film represented by BET, a unit of the mass of the negative active material in the negative film per unit area represented by M is mg/cm², a unit of the specific surface area of the negative film represented by BET is cm²/mg.

Preferably, the negative electrode plate satisfies a relationship: 0.05≤Vp/Sp≤0.20.

The thickness of the negative film represented by T is 45 µm~75 µm.

In one embodiment, the porosity of the negative film represented by P is 20%~60%. Preferably, the porosity of the negative film represented by P is 20%~40%.

The mass of the negative active material in the negative film per unit area represented by M is 6 mg/cm²~12 mg/cm². Preferably, the mass of the negative active material in the negative film per unit area represented by M is 6 mg/cm²~10 mg/cm².

The specific surface area of the negative film represented by BET is 8 cm²/mg~36 cm²/mg. Preferably, the specific surface area of the negative film represented by BET is 15 cm²/mg~36 cm²/mg.

In an embodiment, the negative electrode plate further satisfies a relationship: 35≤CW/(Vp/Sp)≤150, CW represents a coating weight of the negative electrode plate per unit area. Preferably, the negative electrode plate further satisfies a relationship: 42≤CW/(Vp/Sp)≤78.

In one embodiment, the coating weight of the negative electrode plate per unit area represented by CW is 4 mg/cm²~15 mg/cm². Preferably, the coating weight of the negative electrode plate per unit area represented by CW is 6 mg/cm²~12 mg/cm².

In one embodiment, the graphite is one or more selected from a group consisting of artificial graphite and natural graphite.

According to the invention, the negative active material further comprises silicon-based material. The silicon-based material is one or more selected from a group consisting of elemental silicon, silicon oxide, silicon carbon composite and silicon alloy.

In one embodiment, the positive electrode plate comprise a positive current collector and a positive film, the positive film is provided on at least one surface of the positive current collector and comprises a positive active material, the positive active material is one or more selected from a group consisting of lithium nickel cobalt manganese oxide, lithium nickel cobalt aluminum oxide and olivine-type lithium-containing phosphate.

Compared with the existing technologies, the present invention at least includes the following beneficial effects: in the present invention, by matching the relationship between the volume of the channels in the negative film per unit area and the surface area of the channels in the negative film per unit area, a secondary battery having the characteristics of long cycle life, high energy density and fast charging capability at the same time is obtained.

### DETAILED DESCRIPTION

Hereinafter a negative electrode plate and a secondary battery according to the present invention are described in detail.

Firstly, a negative electrode plate according to a first aspect of the present invention is described. The negative electrode plate comprises a negative current collector and a negative film, the negative film is provided on at least one surface of the negative current collector and comprises a negative active material. The negative electrode plate satisfies a relationship: 0.05≤Vp/Sp≤0.30.

Vp = a thickness of the negative film represented by T × a porosity of the negative film represented by P, a unit of the thickness of the negative film represented by T is µm.

Sp = a mass of the negative active material in the negative film per unit area represented by M × a specific surface area of the negative film represented by BET, a unit of the mass of the negative active material in the negative film per unit area represented by M is mg/cm², a unit of the specific surface area of the negative film represented by BET is cm²/mg.

The negative electrode plate needs to undergo the following three electrochemical processes during the charging process of the battery: (1) the ions (such as lithium ions, sodium-ions and the like) deintercalate from the positive active material and enter into the electrolyte, and then enter into the channels of the porous negative electrode plate along with the electrolyte, so that a liquid phase conduction process of the ions in the channels of the porous negative electrode plate is completed; (2) the ions exchange charges with the electrons on the surface of the negative active material; (3) the ions enter into the bulk structure of the negative active material from the surface of the negative active material through a solid phase conduction process.

The liquid phase conduction process with respect to the ions in the channels of the porous negative electrode plate has a very important effect on improving the fast charging capability of the battery, and the liquid phase conduction process with respect to the ions in the channels of the porous negative electrode plate is closely related with the morphology of the negative film.

The inventors has done a large number of researches and found that, the fast charging capability of the battery is closely related with a ratio of a volume of the channels in the negative film per unit area (in the present invention the per unit area means 1 cm²) represented by Vp to a surface area of the channels in the negative film per unit area (in the present invention the per unit area means 1 cm²) represented by Sp. The larger the value of Vp is, the more beneficial for the liquid phase conduction process with respect to the ions in the channels of the porous negative electrode plate is, but the worse the electron conduction capability of the negative electrode plate is; the larger the value of Sp is, the more complicated the channel structure of the porous negative electrode plate is, the more unfavorable for the liquid phase conduction with respect to the ions is, but the better the electron conduction capability of the negative electrode plate is. Therefore, it is necessary to reasonably adjust the ratio between Vp and Sp.

The inventors further found that, when the ratio of the volume of the channels in the negative film per unit area represented by Vp to the surface area of the channels in the negative film per unit area represented by Sp satisfies a relationship 0.05≤Vp/Sp≤0.30, the battery can have long cycle life, high energy density and fast charging capability at the same time.

The value of Vp/Sp needs to be more than or equal to 0.05, at this time, the channel structure of the porous negative electrode plate is more reasonable, the battery can be charged under a fast speed, otherwise the ions are prone to be directly reduced and precipitated on the surface of the negative electrode plate during the charging process of the battery due to the liquid phase polarization. Moreover, the value of Vp/Sp also needs to be less than or equal to 0.30, otherwise the channel structure of the porous negative electrode plate is too developed, the electronic contact between the negative active material particles is deteriorated, the charge exchange speed between the ions and the electrons on the surface of the negative active material is negatively affected, which is not beneficial for improving the fast charging capability of the battery.

In some embodiments of the present invention, a lower limit value of Vp/Sp may be 0.05, 0.06, 0.07, 0.08, 0.09, 0.10, 0.11, 0.12, 0.13, 0.14 and 0.15; an upper limit value of Vp/Sp may be 0.12, 0.13, 0.14, 0.15, 0.16, 0.17, 0.18, 0.19, 0.20, 0.21, 0.22, 0.23, 0.24, 0.25, 0.26, 0.27, 0.28, 0.29 and 0.30. Preferably, 0.05≤Vp/Sp≤0.20.

In the negative electrode plate of the present invention, the thickness of the negative film represented by T is 45 µm~75 µm. When the thickness of the negative film falls within the above ranges thereof, the fast charging capability of the battery can be further improved while maintaining the advantage of high energy density.

In the negative electrode plate of the present invention, preferably, the porosity of the negative film represented by P is 10%~70%; more preferably, the porosity of the negative film represented by P is 20%~60%. When the porosity of the negative film falls within the above preferred ranges thereof, the retention capability of the electrolyte into the negative film is better, the infiltration of the electrolyte into between the negative active material particles is good, the interface charge transfer impedance between the negative active material and the electrolyte is lower, and the fast charging capability and the cycle life of the battery can be further improved.

In the negative electrode plate of the present invention, preferably, the mass of the negative active material in the negative film per unit area represented by M is 4 mg/cm²~15 mg/cm²; more preferably, the mass of the negative active material in the negative film per unit area represented by M is 6 mg/cm²~12 mg/cm². When the mass of the negative active material in the negative film per unit area falls within the above preferred ranges thereof, the porous negative electrode plate can have reasonable channel structure, and the battery can also have high energy density.

In the negative electrode plate of the present invention, the specific surface area of the negative film represented by BET is 8 cm²/mg~36 cm²/mg; more preferably, the specific surface area of the negative film represented by BET is 12 cm²/mg~30 cm²/mg. When the specific surface area of the negative active material falls within the above preferred ranges thereof, the porous negative electrode plate can have reasonable channel structure, thereby avoiding the negative active material from affecting the performances of the battery by generating more side reactions with the electrolyte.

In the negative electrode plate of the present invention, the negative active material comprises carbon-based material and silicon-based material. The carbon-based material is graphite. The graphite may be one or more selected from a group consisting of artificial graphite and natural graphite. The silicon-based material is one or more selected from a group consisting of elemental silicon, silicon oxide, silicon carbon composite and silicon alloy.

The inventors also found that, a coating weight of the negative electrode plate per unit area represented by CW also affects the liquid phase conduction process with respect to the ions in the channels of the porous negative electrode plate. When the relationship between CW and Vp/Sp is further adjusted to satisfy a relationship 20≤CW/(Vp/Sp)≤210, the battery can have higher fast charging capability without compromising the energy density. And a unit of the coating weight of the negative electrode plate per unit area represented by CW is mg/cm².

When the value of Vp/Sp is larger, the value of the coating weight of the negative electrode plate per unit area represented by CW can be larger to make the battery have higher energy density. However, if the value of CW/(Vp/Sp) is more than 210, when other contions are the same, the coating weight of the negative electrode plate per unit area represented by CW is larger, although the energy density of the battery is further improved, the fast charging capability of the battery is prone to decrease to a certain degree.

In some embodiments of the present invention, a lower limit value of CW/(Vp/Sp) may be 20, 21, 22, 23, 24, 25, 26, 27, 28, 29, 30, 31, 32, 33, 34, 35, 36, 37, 38, 39 and 40; an upper limit value of CW/(Vp/Sp) may be 30, 40, 50, 60, 70, 80, 90, 100, 110, 120, 130, 140, 150, 160, 170, 180, 190, 200 and 210. Preferably, 35≤CW/(Vp/Sp)≤150.

Preferably, the coating weight of the negative electrode plate per unit area represented by CW is 4 mg/cm²~15 mg/cm²; more preferably, the coating weight of the negative electrode plate per unit area represented by CW is 6 mg/cm²~12 mg/cm². When the coating weight of the negative electrode plate per unit area falls within the above preferred ranges thereof, the porous negative electrode plate cam have good channel structure, and the battery can also have high energy density.

In the negative electrode plate of the present invention, the negative film may be provided on one of the surfaces of the negative current collector or the negative film may be provided on both surfaces of the negative current collector. The negative film may further comprise a conductive agent and a binder, the types and the contents of the conductive agent and the binder are not specifically limited and may be selected based on actual demands. The type of the negative current collector is not specifically limited and may be selected based on actual demands.

It should be noted that, when the negative film is provided on both surfaces of the negative current collector, as long as the negative film provided on any one of the surfaces of the negative current collector satisfies the present invention, it is considered that the negative electrode plate falls within the protection scope of the present invention. And in the present invention, each parameter of the negative film refers to the parameter of the negative film provided on one of the surfaces of the negative current collector.

In the negative electrode plate of the present invention, the parameters of the the negative active material and the parameters of the negative electrode plate can be measured as follows, or measured according to other methods known in the art, and the obtained results are both within the error range. The porosity of the negative film may be obtained by the gas replacement method, and the porosity is obtained according to an equation P=(V₁-V₂)/V₁×100%, where V₁ represents an apparent volume of the negative film, V₂ represents a real volume of the negative film.

The test method of the specific surface area of the negative film represented by BET may refer to GB/T 19587-2004 determination of the specific surface area of solids by gas adsorption using the BET method.

The mass of the negative active material in the negative film per unit area represented by M may be obtained by a standard balance.

The thickness of the negative film represented by T may be obtained by a 1/10 micrometer, for example by a 1/10 micrometer with a product model of Mitutoyo293-100 and an accuracy of 0.1 µm.

It should be noted that, the thickness of the negative film in the present invention refers to the thickness of the negative film of the negative electrode plate after being cold pressed and used for assembling the battery.

Next a secondary battery according to a second aspect of the present invention is described, the secondary battery comprises the negative electrode plate according to the first aspect of the present invention.

Moreover, the secondary battery of the present invention further comprises a positive electrode plate, an electrolyte and a separator.

In the secondary battery of the present invention, the positive electrode plate comprises a positive current collector and a positive film, the positive film is provided on at least one surface of the positive current collector and comprises a positive active material, the type and the specific composition of the positive electrode plate are not specifically limited and may be selected based on actual demands. The positive film may be provided on one of the surfaces of the positive current collector or the positive film may be provided on both surfaces of the positive current collector. The positive film may further comprise a conductive agent and a binder, the types and the contents of the conductive agent and the binder are not specifically limited and may be selected based on actual demands. The type of the positive current collector is not specifically limited and may be selected based on actual demands.

It should be noted that, the secondary battery according to the second aspect of the present invention may be a lithium-ion battery, a sodium-ion battery and any other battery using the negative electrode plate according to the first aspect of the present invention.

When the secondary battery is the lithium-ion battery, the positive active material may be selected from lithium cobalt oxide, lithium nickel oxide, lithium manganese oxide, lithium nickel manganese oxide, lithium nickel cobalt manganese oxide, lithium nickel cobalt aluminum oxide and olivine-type lithium-containing phosphate, but the present invention is not limited thereto, other conventionally known materials that can be used as the positive active material of the lithium-ion battery can also be used. These positive active materials may be used alone or may be used as two or more of them in combination. Preferably, the positive active material may be one or more specifically selected from a group consisting of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}CO_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄ (LFP) and LiMnPO₄.

When the secondary battery is the sodium-ion battery, the positive active material may be selected from transition metal oxide NaₓMO₂ (M represents transition metal, preferably, M is one or more selected from a group consisting of Mn, Fe, Ni, Co, V, Cu and Cr, 0<x≤1), polyanion-type material (phosphate-type, fluorophosphate-type, pyrophosphate-type, sulfate-type) and prussian blue material, but the present invention is not limited thereto, other conventionally known materials that can be used as the positive active material of the sodium-ion battery can also be used. These positive active materials may be used alone or may be used as two or more of them in combination. Preferably, the positive active material may be one or more specifically selected from a group consisting of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, prussian blue material and a material with a general formula of AₐM_{b}(PO₄)_{c}OₓY₃₋ₓ (A is one or more selected from a group consisting of H⁺, Li⁺, Na⁺, K⁺ and NH₄⁺; M represents transition metal cation, preferably, M is one or more selected from a group consisting of V, Ti, Mn, Fe, Co, Ni, Cu and Zn; Y represents anion of halogen, preferably, Y is one or more selected from a group consisting of F, Cl and Br; 0<a≤4, 0<b≤2, 1≤c≤3, 0≤x≤2).

In the secondary battery of the present invention, the separator is provided between the positive electrode plate and the negative electrode plate and functions to separate the positive electrode plate and the negative electrode plate. The type of the separator is not specifically limited, the separator may be any separator used in existing batteries, for example, the separator may be a polyethylene membrane, a polypropylene membrane, a polyvinylidene fluoride membrane and a multilayer composite membrane thereof, but the present invention is not limited thereto.

In the secondary battery of the present invention, the electrolyte comprises an electrolyte salt and an organic solvent, the specific type of the electrolyte salt and the specific type of the organic solvent are not specifically limited and may be selected based on actual demands. The electrolyte may also comprise an additive, and the type of the additive is not specifically limited. The additive may be a negative film formation additive; the additive may also be a positive film formation additive; the additive may also be an additive used for improving one certain performance of the battery, such as an additive used for improving the overcharge performance of the battery, an additive used for improving the high-temperature performance of the battery, an additive used for improving the low-temperature performance of the battery and the like.

Hereinafter the present invention will be described in detail taking a lithium-ion battery as an example in combination with specific inventive and comparative examples.

### Example 1

### (1) Preparation of a positive electrode plate

The positive active material shown in table 1, super P (conductive agent) and polyvinylidene fluoride (PVDF, binder) according to a mass ratio of 96:2:2 were uniformly mixed with N-methylpyrrolidone (NMP, solvent), which then became homogeneous under stirring via a vacuum mixer, a positive slurry was obtained; then the positive slurry was uniformly coated on an aluminum foil (positive current collector), drying was then performed under room temperature and continual drying was performed in an oven, which was then followed by cold pressing and plate cutting, finally the positive electrode plate was obtained.

### (2) Preparation of a negative electrode plate

The negative active material shown in table 1, super P (conductive agent), carboxymethyl cellulose (CMC, thickening agent) and styrene butadiene rubber (SBR, binder) according to a mass ratio of 96.4:1:1.2:1.4 were uniformly mixed with deionized water (solvent), which then became homogeneous under stirring via a vacuum mixer, a negative slurry was obtained; then the negative slurry was uniformly coated on a copper foil (negative current collector) with a coating weight per unit area represented by CW of 10.4 mg/cm², drying was then performed under room temperature and continual drying was performed in an oven, which was then followed by cold pressing and plate cutting, finally the negative electrode plate was obtained. The porosity of the negative film represented by P and the thickness of the negative film represented by T might be obtained by adjusting the cold pressing parameters (such as the cold pressing pressure, the cold pressing speed and the like).

### (3) Preparation of an electrolyte

Ethylene carbonate (EC), ethyl methyl carbonate (EMC) and diethyl carbonate (DEC) according to a volume ratio of 1:1:1 were mixed together to obtain an organic solvent, then sufficiently dried LiPF₆ (lithium salt) was dissolved into the mixed organic solvent to obtain an electrolyte, and a concentration of the electrolyte was 1 mol/L.

### (4) Preparation of a separator

The separator was a polyethylene membrane.

### (5) Preparation of a lithium-ion battery

The positive electrode plate, the separator and the negative electrode plate were laminated in order, the separator was positioned between the positive electrode plate and the negative electrode plate so as to separate the positive electrode plate from the negative electrode plate, then the positive electrode plate, the separator and the negative electrode plate were wound together to form an electrode assembly, then the electrode assembly was put into a case, which was followed by baking, electrolyte injection, vacuum packaging, standby, formation, shaping and the like, finally a lithium-ion battery was obtained. Preparation of the lithium-ion batteries of examples 2-14 was similar to that in example 1, and the specific differences were shown in table 1.

**Table 1: Parameters of examples 1-10 and comparative examples 1-4**

| | Positive active material | Negative active material | Thickness of negative film T (µm) | Porosity of negative film P | Specific surface area of negative film BET (cm²/mg) | Mass of negative active material in negative film per unit area M (mg/cm²) | Coating weight of negative electrode plate per unit area CW (mg/cm²) |
|---|---|---|---|---|---|---|---|
| Example 1 | LFP | graphite | 45 | 40% | 36 | 10 | 10.4 |
| Example 2 | LFP | graphite | 90 | 40% | 30 | 12 | 12.4 |
| Example 3 | LFP | graphite | 75 | 40% | 15 | 10 | 10.4 |
| Example 4 | LFP | graphite | 75 | 40% | 10 | 15 | 15.6 |
| Example 5 | LFP | graphite | 33 | 60% | 8 | 10 | 10.4 |
| Example 6 | LFP | graphite | 18 | 40% | 5 | 5 | 5.2 |
| Example 7 | NCM 811 | mixture of graphite and silicon oxide with a mass ratio of 8:2 | 30 | 40% | 16 | 4 | 4.1 |
| Example 8 | NCM 811 | mixture of graphite and silicon oxide with a mass ratio of 8:2 | 30 | 40% | 16 | 12 | 12.4 |
| Example 9) | LFP | graphite | 50 | 40% | 30 | 12 | 12.4 |
| Example 10 | LFP | graphite | 30 | 60% | 12 | 5 | 5.2 |
| Example 11 | LFP | graphite | 45 | 20% | 30 | 7 | 7.3 |
| Example 12 | LFP | graphite | 30 | 60% | 8 | 7 | 7.3 |
| Example 13 | NCM 811 | mixture of graphite and silicon oxide with a mass ratio of 8:2 | 45 | 20% | 30 | 7 | 7.3 |
| Example 14 | NCM 811 | mixture of graphite and silicon oxide with a mass ratio of 8:2 | 30 | 60% | 8 | 7 | 7.3 |

Hereinafter test processes of the batteries were described.

### (1) Test of the dynamics performance

At 25 °C, the batteries prepared in the examples were first fully charged at a constant current of x C, and then fully discharged at a constant current of 1 C for 10 cycles, then the batteries were fully charged at a constant current of x C, then the negative electrode plates were disassembled from the batteries, and the lithium precipitation on the surface of each negative electrode plate was observed. If the lithium precipitation was not observed on the surface of the negative electrode plate, the test process was repeated with a charge rate x C increased in increments of 0.1 C, until the lithium precipitation was observed on the surface of the negative electrode plate, and the test process was stopped, the charge rate x C at this time minus 0.1 C was the maximum charge rate of the battery.

### (2) Test of the cycle performance

At 25 °C, the batteries prepared in the examples were charged at a constant current of 3 C and discharged at a constant current of 1 C, the fully charging and discharging process was repeated until the capacity of the battery decayed to 80% of the initial capacity, and the cycle number of the battery was recorded.

### (3) Test of the measured energy density

At 25 °C, the batteries prepared in the examples were fully charged at a constant current of 1 C and fully discharged at a constant current of 1 C, the measured discharge capacity at this time was recorded; at 25 °C, the batteries were weighed by an electronic balance. And the measured energy density of the battery was a ratio of the measured discharge capacity of the battery diacharged at 1 C to the weight of the battery.

When the measured energy density was less than 80% of the targeted energy density, the measured energy density of the battery was considered to be very low; when the measured energy density was more than or equal to 80% of the targeted energy density and less than 95% of the targeted energy density, the measured energy density of the battery was considered to be lower; when the measured energy density was more than or equal to 95% of the targeted energy density and less than 105% of the targeted energy density, the measured energy density of the battery was considered to be moderate; when the measured energy density was more than or equal to 105% of the targeted energy density and less than 120% of the targeted energy density, the measured energy density of the battery was considered to be higher; when the measured energy density was more than or equal to 120% of the targeted energy density, the measured energy density of the battery was considered to be very high.

**Table 2: Test results of examples 1-14**

| | Vp/Sp | CW/(Vp/Sp) | Maximum charge rate | Cycle number | Measured energy density |
|---|---|---|---|---|---|
| Example 1 | 0.05 | 207 | 3.0C | 2800 | higher |
| Example 2 | 0.10 | 124 | 3.6C | 3200 | very high |
| Example 3 | 0.20 | 52 | 3.4C | 3100 | very high |
| Example 4 | 0.20 | 78 | 3.4C | 3300 | very high |
| Example 5 | 0.25 | 42 | 3.2C | 3500 | very high |
| Example 6 | 0.29 | 18 | 3.0C | 2300 | moderate |
| Example 7 | 0.19 | 22 | 3.0C | 1500 | moderate |
| Example 8 | 0.06 | 199 | 3.8C | 1650 | very high |
| Example 9 | 0.06 | 224 | 3.0C | 1650 | very high |
| Example 10 | 0.30 | 17 | 3.0C | 1650 | moderate |
| Example 11 | 0.04 | 169 | 1.1C | 220 | very high |
| Example 12 | 0.32 | 23 | 1.2C | 270 | moderate |
| Example 13 | 0.04 | 169 | 1.0C | 200 | very high |
| Example 14 | 0.32 | 23 | 1.1C | 180 | moderate |

It could be seen from the test results of table 2: the negative electrode plates of the batteries of examples 1-10 all satisfied a relationship 0.05≤Vp/Sp≤0.30, and the battery could have long cycle life, high energy density and fast charging capability at the same time. This was because the relationship between the volume of the channels in the negative film per unit area represented by Vp and the surface area of the channels in the negative film per unit area represented by Sp was good, the channel structure of the porous negative electrode plate was reasonable, the liquid phase conduction resistance with respect to the lithium ions in the channels of the porous negative electrode plate was smaller, therefore the negative electrode plate had good dynamics performance, in turn the preprared battery had long cycle life, high energy density and fast charging capability at the same time.

Compared with examples 1-10, the relationship between the volume of the channels in the negative film per unit area represented by Vp and the surface area of the channels in the negative film per unit area represented by Sp in examples 11-14 was unreasonable , the value of Vp/Sp did not fall within the range (that was 0.05≤Vp/Sp≤0.30), therefore the battery could not have long cycle life, high energy density and fast charging capability at the same time.

Moreover, the thickness of the negative film represented by T preferably was 20 µm~100 µm, when the thickness of the negative film represented by T falled within the above preferred range thereof, the fast charging capability of the battery could be further improved while maintaining the advantage of high energy density. The porosity of the negative film represented by P preferably was 10%~70%, when the porosity of the negative film falled within the above preferred range thereof, the retention capability of the electrolyte into the negative film was better, the infiltration of the electrolyte into betetween the negative active material particles was good, the interface charge transfer impedance between the negative active material and the electrolyte was lower, and the fast charging capability and the cycle life of the battery could be further improved. The mass of the negative active material in the negative film per unit area represented by M preferably was 4 mg/cm²~15 mg/cm², when the mass of the negative active material in the negative film per unit area falled within the above preferred range thereof, the porous negative electrode plate could have reasonable channel structure, and the battery could also have high energy density. The specific surface area of the negative film represented by BET preferably was 8 cm²/mg~36 cm²/mg, when the specific surface area of the negative active material falled within the above preferred range thereof, the porous negative electrode plate could have reasonable channel structure, thereby avoiding the negative active material from affecting the performances of the battery by generating more side reactions with the electrolyte.

When one or more of the thickness of the negative film represented by T, the porosity of the negative film represented by P, the mass of the negative active material in the negative film per unit area represented by M and the specific surface area of the negative film represented by BET did not fall within the above preferred ranges thereof but satisfied a relationship 0.05≤Vp/Sp≤0.30, the battery could still have long cycle life, high energy density and fast charging capability at the same time(for axample example 6).

As could be seen from the comparison among examples 7-8 and examples 13-14, when the battery selected different kinds of positive active materials and different kinds of negative active materials, as long as the negative electrode plate satisfied a relationship 0.05≤Vp/Sp≤0.30, the battery could still have long cycle life, high energy density and fast charging capability at the same time.

Moreover, when the relationship between the coating weight of the negative electrode plate per unit area represented by CW, the volume of the channels in the negative film per unit area represented by Vp and the surface area of the channels in the negative film per unit area represented by Sp was further adjusted to satisfy a relationship 20≤CW/(Vp/Sp)≤210, the fast charging capability and the cycle life of battery could be further improved without compromising the energy density.

## Claims

1. A secondary battery comprising a positive electrode plate, a negative electrode plate, an electrolyte and a separator, the negative electrode plate comprising a negative current collector and a negative film, the negative film being provided on at least one surface of the negative current collector and comprising a negative active material;
wherein
the negative active material comprises graphite and a silicon-based material selected from a group consisting of elemental silicon, silicon oxide, silicon carbon composite and silicon alloy;
the negative electrode plate satisfies a relationship: 0.05≤Vp/Sp≤0.30;
Vp = a thickness of the negative film represented by T × a porosity of the negative film represented by P, a unit of the thickness of the negative film represented by T is µm;
Sp = a mass of the negative active material in the negative film per unit area represented by M × a specific surface area of the negative film represented by BET, a unit of the mass of the negative active material in the negative film per unit area represented by M is mg/cm², a unit of the specific surface area of the negative film represented by BET is cm²/mg;
the thickness of the negative film represented by T is 45 µm~75 µm;
the mass of the negative active material in the negative film per unit area represented by M is 6 mg/cm²~12 mg/cm²;
the specific surface area of the negative film represented by BET is 8 cm²/mg~36 cm²/mg.

2. The secondary battery according to Claim 1, wherein the negative electrode plate satisfies a relationship: 0.05≤Vp/Sp≤0.20.

3. The secondary battery according to any one of Claims 1-2, wherein the porosity of the negative film represented by P is 20%~60%.

4. The secondary battery according to any one of Claim 3, wherein the porosity of the negative film represented by P is 20%~40%.

5. The secondary battery according to any one of Claims 1-4, wherein the mass of the negative active material in the negative film per unit area represented by M is 6 mg/cm²~10 mg/cm².

6. The secondary battery according to any one of Claims 1-5, wherein the specific surface area of the negative film represented by BET is 15 cm²/mg~36 cm²/mg.

7. The secondary battery according to any one of Claims 1-6, wherein the negative electrode plate further satisfies a relationship: 35≤CW/(Vp/Sp)≤150, CW represents a coating weight of the negative electrode plate per unit area.

8. The secondary battery according to Claim 7, wherein the negative electrode plate further satisfies a relationship: 42≤CW/(Vp/Sp)≤78.

9. The secondary battery according to any one of Claims 7-8, wherein the coating weight of the negative electrode plate per unit area represented by CW is 4 mg/cm²~15 mg/cm².

10. The secondary battery according to Claim 9, wherein the coating weight of the negative electrode plate per unit area represented by CW is 6 mg/cm²~12 mg/cm².

11. The secondary battery according to any one of Claims 1-10, wherein the graphite is one or more selected from a group consisting of artificial graphite and natural graphite.

12. The secondary battery according to any one of Claims 1-11, wherein the negative active material further comprises one or more selected from a group consisting of soft carbon, hard carbon and silicon-based material.

13. The secondary battery according to Claim 12, wherein the negative active material further comprises silicon-based material, the silicon-based material is one or more selected from a group consisting of elemental silicon, silicon oxide, silicon carbon composite and silicon alloy.

14. The secondary battery according to any one of Claims 1-13, wherein the positive electrode plate comprise a positive current collector and a positive film, the positive film is provided on at least one surface of the positive current collector and comprises a positive active material, the positive active material is one or more selected from a group consisting of lithium nickel cobalt manganese oxide, lithium nickel cobalt aluminum oxide and olivine-type lithium-containing phosphate.

## Patentansprüche

1. Sekundärbatterie, umfassend eine positive Elektrodenplatte, eine negative Elektrodenplatte, ein Elektrolyt und einen Separator, wobei die negative Elektrodenplatte einen negativen Stromabnehmer und einen Negativfilm umfasst, wobei der Negativfilm auf mindestens einer Oberfläche des negativen Stromabnehmers bereitgestellt ist und ein negatives aktives Material umfasst;
wobei
das negative aktive Material Graphit und ein Material auf Siliziumbasis umfasst, ausgewählt aus einer Gruppe bestehend aus elementarem Silizium, Siliziumoxid, Silizium-Kohlenstoff- Verbundstoff und Siliziumlegierung;
die negative Elektrodenplatte eine Bedingung erfüllt: 0,05 ≤ Vp/Sp ≤ 0,30;
Vp = eine Dicke des Negativfilms, dargestellt durch T × eine Porosität des Negativfilms, dargestellt durch P, eine Einheit der Dicke des Negativfilms, dargestellt durch T, µm ist;
Sp = eine Masse des negativen aktiven Materials in dem Negativfilm pro Flächeneinheit, dargestellt durch M × einem spezifischen Oberflächenbereich des Negativfilms, dargestellt durch BET, eine Einheit der Masse des negativen aktiven Materials in dem Negativfilm pro Flächeneinheit, dargestellt durch M, mg/cm² ist, wobei eine Einheit des spezifischen Oberflächenbereichs des Negativfilms, dargestellt durch BET, cm²/mg ist;
die Dicke des Negativfilms, dargestellt durch T, 45 µm-75 µm beträgt;
die Masse des negativen aktiven Materials in dem Negativfilm pro Flächeneinheit, dargestellt durch M, 6 mg/cm²~12 mg/cm² beträgt;
der spezifische Oberflächenbereich des Negativfilms, dargestellt durch BET, 8 cm²/mg~36 cm²/mg beträgt.

2. Sekundärbatterie nach Anspruch 1, wobei die negative Elektrodenplatte eine Bedingung erfüllt: 0,05 ≤ Vp/Sp ≤ 0,20.

3. Sekundärbatterie nach einem der Ansprüche 1-2, wobei die Porosität des Negativfilms, dargestellt durch P, 20 %~60 % beträgt.

4. Sekundärbatterie nach einem der Ansprüche 3, wobei die Porosität des Negativfilms, dargestellt durch P, 20 %~40 % beträgt.

5. Sekundärbatterie nach einem der Ansprüche 1-4, wobei die Masse des negativen aktiven Materials in dem Negativfilm pro Flächeneinheit, dargestellt durch M, 6 mg/cm²~10 mg/cm² beträgt.

6. Sekundärbatterie nach einem der Ansprüche 1-5, wobei der spezifische Oberflächenbereich des Negativfilms, dargestellt durch BET, 15 cm²/mg~36 cm²/mg beträgt.

7. Sekundärbatterie nach einem der Ansprüche 1-6, wobei die negative Elektrodenplatte ferner eine Bedingung erfüllt: 35 ≤ CW/(Vp/Sp) ≤ 150, wobei CW das Beschichtungsgewicht der negativen Elektrodenplatte pro Flächeneinheit darstellt.

8. Sekundärbatterie nach Anspruch 7, wobei die negative Elektrodenplatte ferner eine Bedingung erfüllt: 42 ≤ CW/(Vp/Sp) ≤ 78.

9. Sekundärbatterie nach einem der Ansprüche 7-8, wobei das Beschichtungsgewicht der negativen Elektrodenplatte pro Flächeneinheit, dargestellt durch CW, 4 mg/cm²~15 mg/cm² beträgt.

10. Sekundärbatterie nach Anspruch 9, wobei das Beschichtungsgewicht der negativen Elektrodenplatte pro Flächeneinheit, dargestellt durch CW, 6 mg/cm²~12 mg/cm² beträgt.

11. Sekundärbatterie nach einem der Ansprüche 1-10, wobei der Graphit ausgewählt ist aus einer Gruppe bestehend aus künstlichem Graphit und natürlichem Graphit.

12. Sekundärbatterie nach einem der Ansprüche 1-11, wobei das negative aktive Material ferner ein oder mehrere Materialien umfasst, ausgewählt aus einer Gruppe bestehend aus weichem Kohlenstoff, hartem Kohlenstoff und Material auf Siliziumbasis.

13. Sekundärbatterie nach Anspruch 12, wobei das negative aktive Material ferner ein Material auf Siliziumbasis umfasst, wobei das Material auf Siliziumbasis eines oder mehrere Materialien ist, ausgewählt aus einer Gruppe bestehend aus elementarem Silizium, Siliziumoxid, Silizium-Kohlenstoff- Verbundstoff und Siliziumlegierung.

14. Sekundärbatterie nach einem der Ansprüche 1-13, wobei die positive Elektrodenplatte einen positiven Stromabnehmer und einen Positivfilm umfasst, der Positivfilm auf mindestens einer Oberfläche des positiven Stromabnehmers bereitgestellt ist und ein positives aktives Material umfasst, wobei das positive aktive Material eines oder mehrere ist, ausgewählt aus einer Gruppe bestehend aus Lithium-Nickel-Kobalt-Mangan-Oxid, Lithium-Nickel-Kobalt-Aluminium-Oxid und lithiumhaltigem Phosphat vom Olivin-Typ.

## Revendications

1. Batterie secondaire comprenant une plaque-électrode positive, une plaque-électrode négative, un électrolyte et un séparateur, la plaque-électrode négative comprenant un collecteur de courant négatif et un film négatif, le film négatif étant disposé sur au moins une surface du collecteur de courant négatif et comprenant une matière active négative ;
dans laquelle
la matière active négative comprend du graphite et une matière à base de silicium choisie dans le groupe constitué par le silicium élémentaire, l'oxyde de silicium, un composé silicium-carbone et un alliage de silicium ;
la plaque-électrode négative satisfait à la relation : 0,05≤Vp/Sp≤0,30 ;
Vp = une épaisseur du film négatif représentée par T × une porosité du film négatif représentée par P, une unité de l'épaisseur du film négatif représentée par P étant le µm ;
Sp = une masse de la matière active négative dans le film négatif par unité de superficie, représentée par M × une aire spécifique du film négatif représentée par BET, une unité de la masse de la matière active négative dans le film négatif par unité de superficie, représentée par M, étant le mg/cm², une unité de l'aire spécifique du film négatif, représentée par BET, étant le cm²/mg ;
l'épaisseur du film négatif, représentée par T, est comprise entre 45 µm et 75 µm ;
la masse de la matière active négative dans le film négatif par unité de superficie, représentée par M, est comprise entre 6 mg/cm² et 12 mg/cm² ;
l'aire spécifique du film négatif, représentée par BET, est comprise entre 8 cm²/mg et 36 cm²/mg.

2. La batterie secondaire selon la Revendication 1, dans laquelle la plaque-électrode négative satisfait à la relation : 0,05≤Vp/Sp≤0,20.

3. La batterie secondaire selon l'une quelconque des Revendications 1-2, dans laquelle la porosité du film négatif, représentée par P, est comprise entre 20 % et 60 %.

4. La batterie secondaire selon la Revendication 3, dans laquelle la porosité du film négatif, représentée par P, est comprise entre 20 % et 40 %.

5. La batterie secondaire selon l'une quelconque des Revendications 1-4, dans laquelle la masse de la matière active négative dans le film négatif par unité de superficie, représentée par M, est comprise entre 6 mg/cm² et 10 mg/cm².

6. La batterie secondaire selon l'une quelconque des Revendications 1-5, dans laquelle l'aire spécifique du film négatif, représentée par BET, est comprise entre 15 cm²/mg et 36 cm²/mg.

7. La batterie secondaire selon l'une quelconque des Revendications 1-6, dans laquelle la plaque-électrode négative satisfait en outre à la relation : 35≤CW/(Vp/Sp)≤150, CW représentant un poids de revêtement de la plaque-électrode négative par unité de superficie.

8. La batterie secondaire selon la Revendication 7, dans laquelle la plaque-électrode négative satisfait en outre à la relation : 42≤CW/(Vp/Sp)≤78.

9. La batterie secondaire selon l'une quelconque des Revendications 7-8, dans laquelle le poids de revêtement de la plaque-électrode négative par unité de superficie, représenté par CW, est compris entre 4 mg/cm² et 15 mg/cm².

10. La batterie secondaire selon la Revendication 9, dans laquelle le poids de revêtement de la plaque-électrode négative par unité de superficie, représenté par CW, est compris entre 6 mg/cm² et 12 mg/cm².

11. La batterie secondaire selon l'une quelconque des Revendications 1-10, dans laquelle le graphite est au moins un graphite choisi dans le groupe constitué par le graphite artificiel et le graphite naturel.

12. La batterie secondaire selon l'une quelconque des Revendications 1-11, dans laquelle la matière active négative comprend en outre au moins une matière choisie dans le groupe constitué par le carbone doux, le carbone dur et une matière à base de silicium.

13. La batterie secondaire selon la Revendication 12, dans laquelle la matière active négative comprend en outre une matière à base de silicium, la matière à base de silicium étant au moins une matière choisie dans le groupe constitué par le silicium élémentaire, l'oxyde de silicium, un composé carbone-silicium et un alliage de silicium.

14. La batterie secondaire selon l'une quelconque des Revendications 1-13, dans laquelle la plaque-électrode positive comprend un collecteur de courant positif et un film positif, le film positif est disposé sur au moins une surface du collecteur de courant positif et comprend une matière active positive, la matière active positive est au moins une matière choisie dans le groupe constitué par un oxyde de lithium-nickel-cobalt-manganèse, un oxyde de lithium-nickel-cobalt-aluminium et un phosphate contenant du lithium du type olivine.
